Europäisches Patentamt

**European Patent Office**

**Office européen des brevets**

(11) Publication number: **0 110 727**
**A2**

# EUROPEAN PATENT APPLICATION

(21) Application number: **83307367.9**

(22) Date of filing: **02.12.83**

(51) Int. Cl.³: **B 43 L 11/04,** B 25 H 7/02,
B 26 D 3/10

(30) Priority: **07.12.82 GB 8234864**

(43) Date of publication of application: **13.06.84**
**Bulletin 84/24**

(84) Designated Contracting States: **BE DE FR GB IT NL SE**

(71) Applicant: **KEEN CUTTERS LIMITED, Edison Courtyard Brunel Road Earlstrees Industrial Estate, Corby Northamptonshire NN17 2LS (GB)**

(72) Inventor: **Lockwood, Robin Christopher, Cottesmore Grange, Near Oakham Rutland LE15 7DH (GB)**

(74) Representative: **Kirk, Geoffrey Thomas, BATCHELLOR, KIRK & EYLES 2 Pear Tree Court Farringdon Road, London EC1R 0DS (GB)**

(54) **Machine for drawing or cutting ellipse.**

(57) A machine for marking an ellipse on, or for cutting an elliptical opening in, a sheet of material comprises a table structure (9) which is rotatable about an upstanding pin (15) and at the same time is reciprocated if the pin is displaced away from the centre of a circular bearing (5) which restrains the table structure.

A marking instrument or cutting tool (35) is positioned above the table and can be offset from the pin so as to determine one of the axes of the ellipse while the other is determined by the offset of the pin from the centre of the bearing.

1

## MACHINE FOR DRAWING OR CUTTING ELLIPSE

This invention relates to a machine for drawing an ellipse on, or for cutting an opening of elliptical form in, sheet material such as cardboard, paper, wood and glass.

The machine has a particular application for cutting elliptical openings in such materials for use in framing pictures, photographs, and the like.

According to the present invention, a machine for drawing an ellipse on, or for cutting an opening of elliptical form in, a workpiece in the form of sheet material comprises a fixed circular bearing having a radial slot therein; a pin upstanding in the slot and being displaceable in the slot in a direction normal to its length; a table structure having a support surface for supporting a workpiece in the form of sheet material, said table structure being rotatable about the pin, and including a pair of elongate parallel guides which are freely slidable around the periphery of the circular bearing and serve to guide the structure; means for displacing the pin in the slot relative to the centre of the bearing; a support for a marking tool or cutter carried on a frame overlying a part of the support surface of the table structure and the position of said support relative to the structure being adjustable in the direction parallel to the direction of displacement of the pin.

The major axis of the ellipse, which is marked on, or cut into, a workpiece supported on the table structure when the machine is in use, is determined by the position of the pin relative to the centre of the fixed circular bearing and the minor axis of the ellipse is determined by the position of the support for the marking tool or cutter in the direction parallel to the direction of adjustment of the pin.

By making the minor axis equal to the major axis, a circle is produced and it is clear that the machine can be used for cutting or marking circles, if desired.

The machine is particularly suitable for cutting an elliptical opening in a thick sheet of cardboard which is used in a picture frame to provide an elliptical mount for a picture or photograph. Similarly, an elliptical opening can be cut in a thin sheet of wood to provide a mount for a picture or photograph.

Further, the machine can also produce an elliptical opening in a sheet of glass or produce an elliptical piece of glass which can be used in framing a picture or photograph.

In order that the invention may be more readily understood, it will now be described, by way of example only, with reference to the accompanying drawings, in which:-

Figure 1 is a side elevation of a machine in accordance with one embodiment of the invention;

Figure 2 is a plan of the machine shown in Figure 1;

Figure 3 is a front elevation of a machine according to an alternative embodiment of the invention;

Figure 4 is a plan of the machine shown in Figure 3 with parts omitted and others cut away; and

Figure 5 is a plan of part of the machine shown in Figure 3.

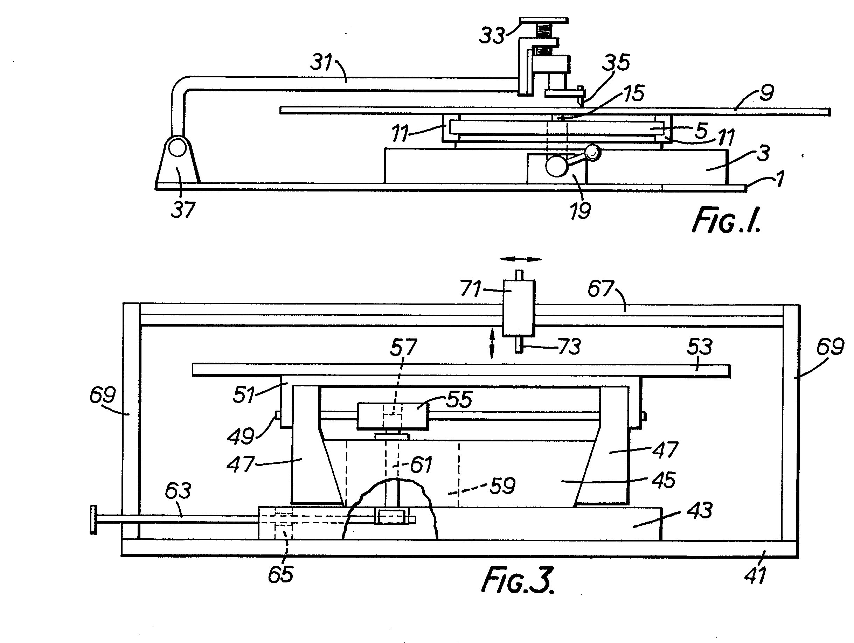

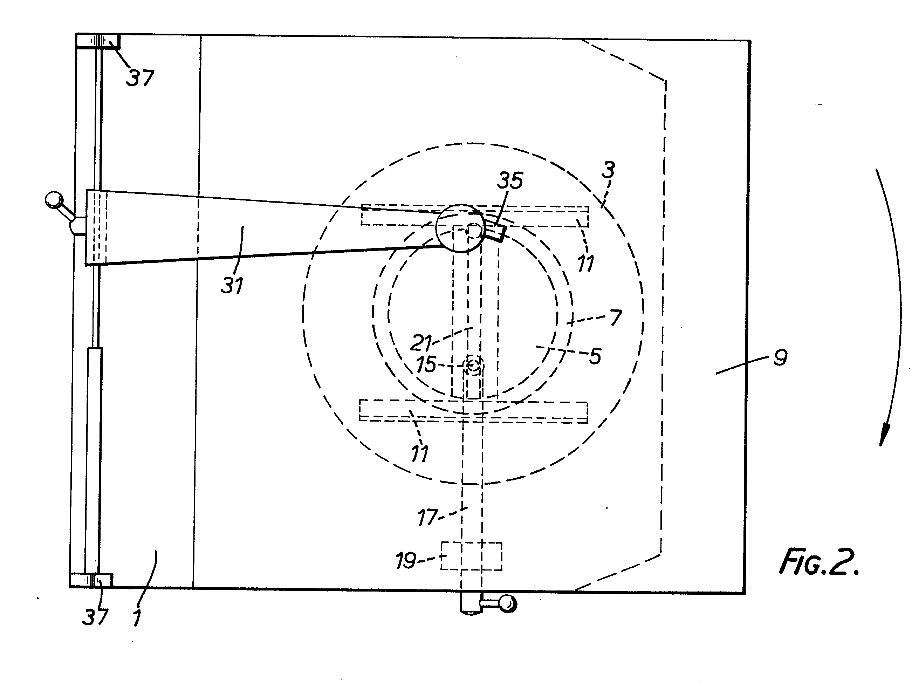

Referring to Figures 1 and 2, a machine for marking or cutting ellipses in a workpiece of sheet material consists of a baseboard 1 carrying a fixed block 3 and, on the upper side of this block, there is fixed a bearing in the form of a cylindrical disc 5. A workpiece support table structure 9 is positioned above the upper surface of the disc 5, and, on the underside of the table 9, there are a pair of parallel channel-shaped guides 11 which bear against the peripheral wall of the disc on opposite sides thereof. The support table and the guides are freely movable relative to the disc 5.

An elongate rod 17 projects from one side of the baseboard 1 into the block 3 and, at the end of the rod within the block 3, there is mounted a pin 15 which is arranged normal to the length of the rod. The rod can be moved in the direction of its length and clamped into a desired axial position by a clamping device 19. The pin 15 projects through a slot 21 arranged radially in the disc 5 and projects into a further slot formed in the underside of the table 9. The slot in the underside of the table 9 extends at right angles to the length of the guides 11 and is approximately midway along the length of the guides.

The table structure 9 is thus rotatable about the vertically disposed pin and, when the pin is at the centre of the disc 5, the rotation of the table structure 9 is circular about the pin. However, if the pin is moved away from the centre of the circle along the slot 21, the movement of the table 9 is then circular with a reciprocation in the direction of the slot 21. The degree of displacement of the pin from the centre determines the throw of the reciprocating movement of the table.

An arm 31 is cantilevered at one end from a rail 37 mounted on the baseboard 1 and the arm overlies part of the support table 9. At the free end of the arm, there is a support 33 for a marking tool or cutter 35. The arm 31 is slidable along the rail 37 and can be locked into a desired position, so as to be able to adjust the position of the tool support 33 relative to the centre of the disc 5.

In the arrangement shown in Figures 1 and 2, the support 33 carries a cutting blade 35 and the blade is mounted on a screw which allows it to be raised or lowered with respect to the table 9.

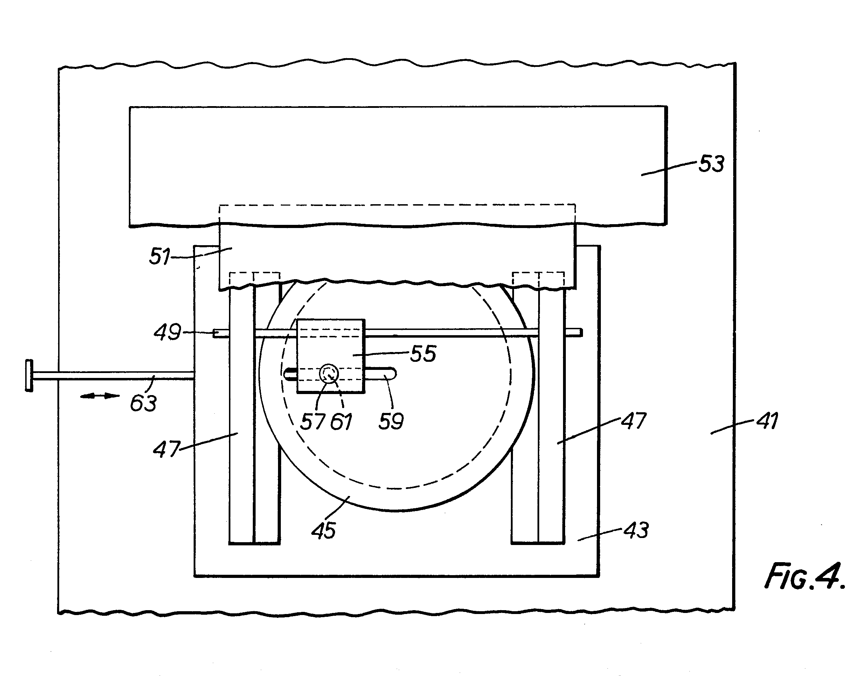

In the arrangement shown in Figures 3, 4 and 5, the machine comprises a baseboard 41 having a block 43 mounted on it. On the upper surface of the block, there is a fixed bearing disc 45 which is of inverted frusto-conical form and is conveniently manufactured from PTFE. A pair of guides 47 are arranged parallel to each other and each one has an inclined surface which corresponds with the inclined peripheral surface of the disc 45 and the two guides are held together in spaced relation by a rod 49. A sheet metal cover 51 is fitted over the upper end of the guides and the workpiece support table 53 is mounted on this cover.

Mounted on the rod 49 is a block 55 which is freely slidable along the rod and which has a hole 57 in it which can be aligned with the centre of the disc 45. The disc has a radial slot 59 formed in it and a pin 61 extends through the slot 59 and into the hole 57 in the block 55. The structure consisting of the

6

support table 53, the cover 51, the guides 47, the rod 49, and the block 55 are all rotatable about the pin 61. This pin is mounted on one end of a rod 63, with the pin substantially at right angles to the rod, and the rod projects into the block 43. In this block, there is a clamping device 65 which permits the rod 63 to be displaced in the direction of its length and then locked into a desired position. In this way, the pin 61 can be moved along the slot 59 formed in the disc 45.

A bar 67 of generally rectangular cross-section is mounted at its ends on a pair of supports 69 upstanding from the baseboard and arranged such that the bar overlies part of the support surface on the table 53 but is offset from the centre of the disc 45. A support 71 for a cutting or marking tool 73 is slidable along the bar 67 and can be clamped into a predetermined position on the bar. The support allows the tool or cutter 73 to be moved towards and away from the support table 53.

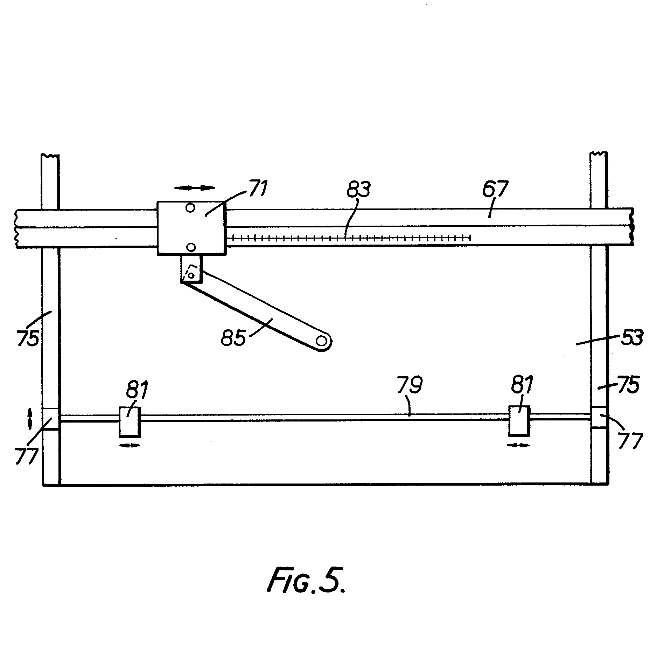

As shown in more detail in Figure 5, the support table 53 has a pair of flanged opposite edges 75 and sliders 77 are displaceable along these edges. The sliders carry a bar 79 on which a pair of clamps 81 for clamping a workpiece on the support table are positioned. A similar pair of sliders 77 supporting a further bar with clamps 81 is also provided but not shown in Figure 5.

The bar 67 conveniently carries a scale 83 which indicates the position of the marking tool or cutter from the centre of the disc.

In the arrangemnt shown in Figure 5, the workpiece marking tool or cutter is mounted on an arm 85 secured to the support 71.

In use, a sheet of paper, cardboard, glass or wood is positioned on the upper surface of the workpiece support (9, 53) surface and is held firmly by the releasable clamps. The table structure is then rotated by hand or, if desired, some form of electrical motor could be fitted, and the table rotates around the fixed disc (5, 45) but, at the same time, the table structure is reciprocated about the disc if the pin is offset from the centre of the disc. The marking tool or cutter blade is lowered on to the workpiece and, as the table and workpiece are rotated, the marking or cutting of the workpiece is performed. When employing a cutting tool, by gradually increasing the depth of penetration of the tool, an opening is cut in the workpiece fitted on to the support table. The opening is in the form of an ellipse having a major axis determined by the position of the pin relative to the centre of the disc and the minor axis is determined by the offset of the marking or cutting tool from the centre of the disc in the direction of the length of the slot (21, 59) in the disc.

Clearly, by positioning the pin at the centre of the disc and by positioning the cutting tool by a fixed distance from the centre of the disc, then a circular mark or cut is formed on the workpiece.

When a blade is used, it is preferably pivotally mounted on the support and also it may be inclined at an angle so that the cut formed in the workpiece has a bevelled edge. The blade may be used to cut paper or cardboard but, when the workpiece is glass, the blade is replaced by a glass cutter, and, if the workpiece is wood, a router is mounted in the tool support.

Claims:

1.      A machine for drawing an ellipse on, or for cutting an opening of elliptical form in, a workpiece in the form of sheet material comprising

a fixed circular bearing (5, 45) having a radial slot (21, 59) therein;

a pin (15, 61) upstanding in the slot and being displaceable in the slot in a direction normal to its length;

a table structure having a support surface (9, 53) for supporting a workpiece in the form of sheet material, said table structure being rotatable about the pin, and including a pair of elongate parallel guides (11, 47) which are freely slidable around the periphery of the circular bearing and serve to guide the structure;

means (17, 63) for displacing the pin in the slot relative to the centre of the bearing;

a support (33, 71) for a marking tool or cutter carried on a frame (31, 67) overlying a part of the support surface of the table structure and the position of said support relative to the structure being adjustable in the direction parallel to the direction of displacement of the pin.

2.       A machine as claimed in claim 1, in which the pin (15) is mounted on an elongate rod (17) which extends at right angles to the length of the pin and the rod is adjustably displaceable in the direction of its length.

3.       A machine as claimed in claim 2, in which the pin projects into a hole in a block (55) forming part of the table structure and movable in the direction normal to the length of the elongate guides (47).

4.       A machine as claimed in claim 3, in which the block (55) is freely slidable along a rod (49) connected at right angles to the guides.

5.       A machine as claimed in claim 2, in which the pin projects into a slot in the table structure, said slot extending in the direction normal to the length of the elongate guides.

6.       A machine as claimed in any preceding claim, in which the circular bearing (45) is of inverted frusto-conical form and each guide (47) has a correspondingly inclined surface which bears against the periphery of the bearing.

7. A machine as claimed in any of the claims 1 to 5, in which the circular bearing (5) is in the form of a cylindrical disc, and each guide (11) has a portion which fits over the peripheral edge of the disc.

8. A machine as claimed in any preceding claim, in which the bearing (5, 45) is fixed to a baseboard (1, 41) and the frame (31, 67) is mounted on the baseboard.

9. A machine as claimed in claim 8, in which the frame (31) is mounted in cantilever manner on the baseboard (1) and is movable relative to the baseboard.

10. A machine as claimed in any preceding claim in which the support (33, 71) for the marking tool or cutter permits the marking tool or cutter (35, 73) to be moved towards or away from the support surface of the table structure in order to vary the depth of marking or cutting on a workpiece supported on the surface.

FIG.I.

FIG.3.

FIG.2.

0110727

Fig. 4.

FIG.5.